# EUROPEAN PATENT APPLICATION

(11) **EP 0 922 612 A2**
(43) Date of publication of application: **16.06.1999**
(21) Application number: 98830751.8
(22) Date of filing: 11.12.1998
(51) Int. Cl.: B60Q 7/00

(54) **Inflatable safety triangle**

(30) Priority: 11.12.1997 BR 2907097 U
(71) Applicant: Tri-Wm Industria e Comércio Ltda., Sao Paulo (BR)
(72) Inventor: Heluany Moysés, Gilberto, Sao Paulo (SP) (BR)
(74) Representative: Manzoni, Alessandro

(57) **Abstract**

This invention relates to an inflatable signalling device designed specifically for vehicles for use in emergency situations on the road.

The signalling device is comprised of a triangular inflatable body having, on each of the front faces, red reflecting strips that are welded onto the same.

The signalling device may also be fitted with optical signalling devices (9) positioned near the vertices of the triangular body and powered by batteries by means of wires passing under the reflecting strips welded onto the body.

## Description

This invention relates to a new inflatable signalling device for vehicles for use in emergency situations on the road.

A signalling device with the same purpose is described in document BR-MU-7501424-6 dated 13.5.1995, and this invention concerns improvements made to the previous signalling device to make it more effective and practical to use.

The front signalling device presented a triangular prismatic body mounted on a base for stability and if was powered by the vehicle battery or cigarette lighter via an electrical wire.

The aim of this invention is to eliminate the need for the signalling device to be dependant on electricity from the vehicle, and hence to simplify use thereof.

To this end, the inflatable triangle in this invention, in its triangular shape with a central hole, is provided with a tube for blowing in air from, for example, one of the vehicle's tyres, preferably the spare tyre.

Furthermore, on the outer faces of the inflatable body there are applied red reflecting strips that are welded on electronically.

This new signalling triangle has a further advantage in that signalling LEDs can be incorporated into it and arranged at the vertices of the triangular structure and powered by a set of batteries connected to them by means of wires positioned under the reflecting strips welded onto the inflatable body.

For better understanding of the invention, this description continues with reference to the attached indicative but non-limiting diagrams in which:

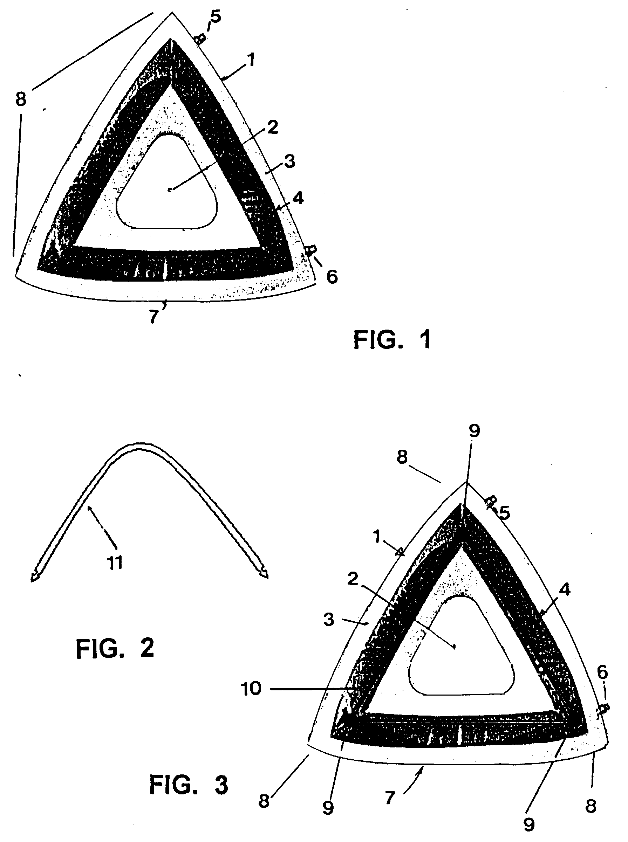

Fig. 1 shows a front view of the signalling device;
Fig. 2 shows a view of the inflating tube ; and
Fig. 3 shows a front schematic view of the signalling device equipped with LEDs.

Said diagrams depict, in very small detail, the new signalling device as having an inflatable triangular prismatic body (1), with an opening in the centre (2) and with the faces (3) covered centrally by reflecting strips (4) fixed onto the body by means of welding along the edges.

One side of the inflatable body is fitted with a pair of valves (5 and 6) for inflating and deflating the triangle, whereas the base side has a bag (7) containing a stabilising mass, such as sand.

The device may be equipped, near the vertices (8), with electric optical signalling devices, preferably LEDs (9), powered by a set of batteries connected to the LEDs by means of wires (10) situated under the reflecting strips (4).

In emergencies, the car driver inflates the signalling triangle quickly and easy using the tube (11), and the vertices adapt by simple pressure to the signalling device inflating valve on one hand and to the vehicle tyre valve, preferably the spare tyre, on the other.

After inflation, the device is clearly visible, indicating the hazard and the presence of a stopped vehicle on the road following a breakdown or accident. The LEDs on the signalling device can draw attention to the halted vehicle more visibly.

## Claims

1. An inflatable safety triangle characterized by a triangular prismatic body (1), with an opening in the centre (2) and with the faces (3) covered centrally by reflecting strips (4) fixed onto the body by means of welding along the edges, and in which one side the inflatable body is fitted with a pair of valves (5 and 6) for inflating and deflating the body, whereas the base side has a bag (7) containing a stabilising mass, such as sand.

2. An inflatable safety triangle according to claim 1, having near the vertices (8) electric optical signalling devices (9), preferably LEDs, powered by a set of batteries connected to said optical signalling devices by means of wires (10) situated under the reflecting strips (4).
